# EUROPEAN PATENT APPLICATION

(11) **EP 1 162 580 A2**
(43) Date of publication of application: **12.12.2001**
(21) Application number: 01113389.9
(22) Date of filing: 01.06.2001
(51) Int. Cl.: G07F 7/00

(54) **Order placement and payment settlement system**

(30) Priority: 05.06.2000 JP 2000167069; 24.05.2001 JP 2001155644
(71) Applicant: Annex Systems Incorporated, Tokyo 107-0061 (JP); TAMATSU, MASAHARU, TAMA-SHI, TOKYO 206-0023 (JP)
(72) Inventor: Tamatsu, Masaharu, Tama-shi, Tokyo 206-002 (JP)
(74) Representative: Henkel, Feiler, Hänzel

(57) **Abstract**

This order placement and payment settlement system provides secure transactions in online shopping by means of the intermediation of settlement bodies that authenticate buyers and sellers, allowing each party to conduct business with confidence in the other. The buyer's computer or other data terminal accesses the seller's server to obtain purchase order information and transmits such information as is required to the server of the settlement body. On the basis of that information, the server of the settlement body references buyer credit databases provided to it and then transmits the purchase order to the seller's server only when the buyer is capable of making payment. The settlement body server also uses a trustworthiness ranking of the seller to determine the timing of settlement and effects settlement unless the buyer objects to settlement before that time. The system thus provides both the buyer and the seller with enhanced confidence in the integrity of the transaction.

## Description

### BACKGROUND OF THE INVENTION

### 1. Field of the Invention

This invention relates to the field of order placement and payment settlement systems in which buyers may shop with confidence and sellers sell with confidence due to authentication of buyers provided by the mediation of a settlement body in online shopping transactions conducted over a telecommunications network in which goods, services, information and the like are bought and sold.

### 2. Description of Related Art

Online shopping has been understood as a system in which buyers use telecommunications networks to purchase goods, services, information and the like without visiting the seller's place of business.

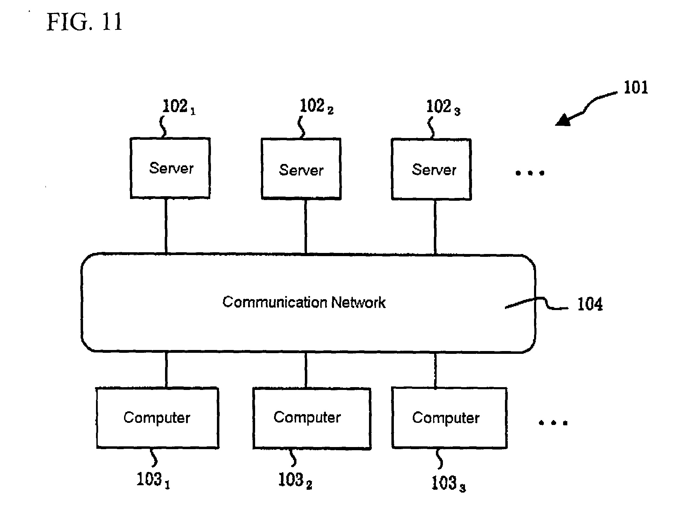

Figure 11 illustrates the configuration of extant online shopping. The online shopping system 101 illustrated here allows the purchase of goods, services, information and the like by connecting buyers' communications devices 103₁, 103₂, 103₃, ... 103n with sellers' servers 102₁, 102₂, 102₃, ... 102m via a telecommunications network 104. The subscripts n and m indicate that the buyers and sellers are particular, discrete identities.

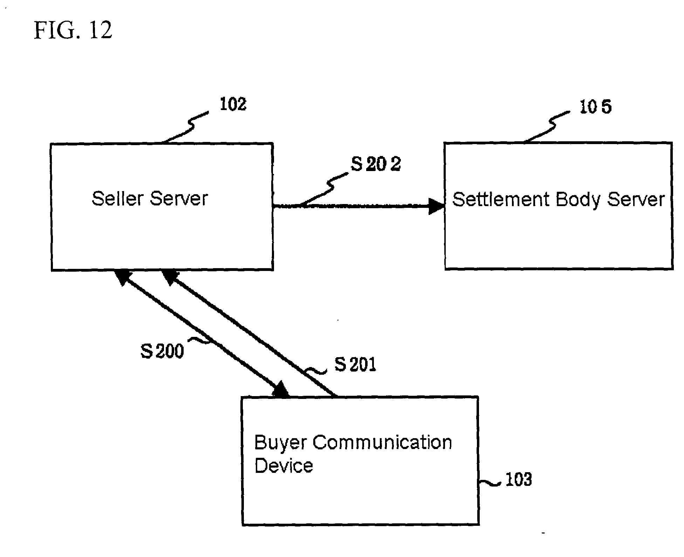

Figure 12 illustrates how payments are settled in such an online shopping system. The buyer connects his or her communications device 103 to the seller's server 102, accesses the seller's webpages and, if the buyer finds a good, service, set of information or the like that he or she wishes to purchase, provides order information, such as product name, product code and quantity, provides settlement information, such as a credit card number or debit card number if payment is to be settled by credit card or debit card, provides delivery information, such as the buyer's name, address and telephone number, and transmits this information (S201 in Figure 12) to the seller. The seller confirms the validity of the credit card or debit card, perhaps telephones the buyer to confirm the order, delivers the product or other order and makes the sale.

The seller then transmits (S202 in Figure 12) the settlement information from the seller's server 102 to the server 105 of the credit card company, bank, Internet service provider or other settlement body, billing the settlement body for the sale.

### SUMMARY OF THE INVENTION

This extant model of online shopping entails problems involving authentication and trust in its resolution of the settlement question, which problems are discussed below.

Online shopping offers a variety of means for the settlement of payments, including bank deposit transfers, cash on delivery, the use of convenience stores for taking receipt of goods and making payments, and credit cards.

Advance payment by bank deposit transfer provides a seller with certainty of payment since payment is made in advance of delivery, but leaves the buyer uncertain as to whether the seller is in fact certain to deliver the purchase made. On the other hand, deferred payment by bank deposit transfer leaves the seller uncertain as to whether the buyer is in fact certain to make payment.

Neither the buyer nor the seller see much risk in cash on delivery since the product is exchanged for payment, but, in addition to the high service fees involved, cash on delivery suffers from a number of drawbacks: the buyer must be physically present to take delivery, the delivery boxes made available in apartment houses cannot be used, and the buyer may not have sufficient funds to hand if the purchase arrives earlier than anticipated.

While taking delivery at convenience stores eliminates the drawbacks of regular cash-on-delivery settlement, it suffers from the drawback that the buyer must go to a convenience store. An additional drawback is that the convenience store must provide storage space, and buyers must endure the inconvenience of paying storage charges and handling charges.

Although settlement by cash on delivery and at convenience stores is efficacious for the purchase of tangible, concrete goods, it cannot meet the needs of purchases of services or information.

Of the payment settlement methods mentioned above, credit card settlement is most widely in use. When a credit card is used for settlement, the buyer must transmit his or her credit card number to the seller, a procedure that suffers from several drawbacks:
(1) There is a risk that the credit card number may be stolen and used illicitly by a third party. This risk applies not only when the information is travelling over the telecommunications network. When buyers register credit card numbers with a seller in an arrangement that allows them to later place orders by means of simple operations, there is a possibility that the credit card numbers may leak outside the seller's organization, as through unauthorized access to the seller's server by procedures commonly known as "hacking".
(2) There is a risk that the seller or an employee of the seller may make illicit use of the credit card number.
(3) Since the seller must consider the possibility that any given card is being used illicitly, the seller must confirm the card's validity and therefore calculate its gross sales at a later time than it takes orders, which framework makes it problematic for the seller to exclude completely the illicit use of credit cards.

Thus it is that such measures as encryption and authentication are employed to ward off the theft of credit card numbers by third parties. An implementation of encryption is secure socket layers (SSL), but it is not in fact in widespread use. SSL requires advance certification by, for example, a third-party certifications body and, this being troublesome as well as entailing expense, users tend not to obtain such certification. And since such certification amounts to no more than that the user is who he or she claims to be, it has no bearing at all on the trustworthiness of an online shop or on a given individual's ability to make payment.

Other problems with SSL include its exclusion by some firewalls, the restrictions placed by some countries' national governments on strong, 128-bit encryption and the lower volume of transactions that can be processed due to the computational demands it makes in comparison with systems that eschew encryption.

From a credit card company's point of view, the release of credit card numbers to an indefinite large number of sellers entails concern over their abuse and also raises doubts about whether the sellers and buyers are using them legitimately. Falsified credit card numbers are also resulting in considerable damages. Although illegitimate use is covered by insurance, credit card companies directly bear the cost of insurance premiums, the buyers and sellers bear this cost indirectly and the cost is threatening the credit card companies' operations. These same problems lie dormant at banks using debit cards.

Internet service providers (ISPs) often serve as proxies in taking payment for purchases of information, but this arrangement suffers from the drawback, from the points of view of buyers and sellers, that a contract with a particular ISP is required in order to use the information.

Online malls offer other solutions for payment settlement. Some online malls are formed around settlement operations and place seller information on their webpages, and others are collections of webpages that use one or more of the means described above to conduct settlements. Between the former and the ISP serving as proxy in collecting payments as described above, there is hardly any great difference and they suffer from the same drawback. The latter suffers from the same drawbacks as online shopping in general that are described above.

Thus, buyers, online shops (sellers) and credit card companies all have anxieties under implementations of online shopping in the current state of the art. However, the development of online shopping will require certainty of authentication and payment.

The present invention is conceived in view of the drawbacks described above and provides an order placement and payment settlement system in which buyers may shop safely and sellers of goods, services, information and the like may sell safely due to the mediation of a settlement body authenticating buyers in online shopping over a telecommunications network.

To achieve this objective for online shopping in which buyers' communications devices connect to sellers' servers via a telecommunications network over which sellers offer goods, services, information and the like for sale, the present invention is characterized by the connection to the telecommunications network of the servers of a settlement body; means for the communications devices of buyers to retrieve information from the servers of sellers on the products, services or information offered for sale, create purchase information specifying the products, services or information required by the buyer, transmit that purchase information to the servers of the settlement body for the purposes of authorizing settlement of that purchase and requesting a proxy order placement for that purchase; and means for the servers of the settlement body to receive the purchase information received from the communications devices of buyers, reference one or more databases, prepared in advance, to ascertain the trustworthiness of buyers and transmit order placement information to the servers of the sellers only when a buyer is capable of making a purchase.

The present invention may also provide means by which the servers of the settlement body receive purchase information from the terminals of buyers that buyers have obtained from sellers, reference one or more databases, prepared in advance, to ascertain the trustworthiness of buyers and transmit the order placement information to the servers of the sellers only when the buyer is capable of making the purchase.

The present invention may also provide means by which the servers of the settlement body reference one or more databases to ascertain the ratings of sellers, determine payment deferment periods on the basis of those ratings and carry out payments to sellers if the buyer does not raise an objection to payment during the deferment period.

The present invention may also provide means by which the servers of the settlement body register in advance a means of contacting buyers, such as their email addresses, and, whether periodically, occasionally or on each instance of purchase, contact buyers to inform them of purchase orders placed.

The present invention may also provide means by which the servers of the settlement body transmit a different authentication code to the communications device of a buyer each time a communications session is effected and are able to determine whether the code matches the buyer in a purchase transaction.

The present invention may also provide means by which the servers of the seller provide, as in webpages, descriptions of the goods, services or information offered and means by which the servers of the seller receive information containing order placement information transmitted from the servers of the settlement body and accept orders on the basis of this information containing order placement information.

References herein to "sellers' servers", "the server of a seller" and the like are not only to servers owned and operated by sellers themselves, but also to those owned and/or operated by contractors providing such services to sellers.

The term "settlement body", as used herein, includes banks, post office networks, insurers, securities firms, credit card issuers and organizations that operate computerized, online malls on communications networks, publish the business information of one or more sellers, intermediate commercial transactions and carry out the settlement of the payments thus entailed. As used herein, the term "settlement body" also includes proxy settlement bodies that carry out or mediate settlements on behalf of one or more nominal settlement bodies.

References herein to "buyers' communications devices", "the communications device of a buyer" and the like refer not only to such personal computers, portable telephones, handheld devices and other Internet-capable devices as are available in the known marketplace, but also to other such communications devices as may appear in future.

References herein to "information indicative of the trustworthiness of buyers" and the like includes such information as the customer credit information held by credit card companies, bank account balances and post office savings account balances.

### OBJECTS AND ADVANTAGES

Accordingly, several objects and advantages are:
(a) To reduce opportunities to steal such information as credit card numbers and bank account numbers since it is not transmitted over communications networks;
(b) To reduce the incidence of credit card fraud since such information as credit card numbers and bank account numbers is not transmitted over communications networks;
(c) To protect against abuse of credit card numbers and bank account numbers by sellers and against intrusions on sellers committed by hackers since such information is not transmitted to sellers;
(d) To allow sellers to do business with buyers with confidence since buyers are authenticated by a settlement body;
(e) To allow buyers to make purchases from sellers with confidence since settlement may be deferred for some predetermined period of time, during which a buyer may register a complaint or other objection to settlement;
(f) To allow buyers to detect illegitimate use of their identities, as registered with a settlement body, by third parties and hold damages to a minimum, if the settlement body notifies buyers periodically, occasionally or on each instance of purchase orders placed;
(g) To provide increased reliability of authentication, if the settlement body assigns each buyer a different authentication code each time a communications session is established; and
(h) To allow sellers to accept purchase orders with greater confidence, if purchase orders are taken on the basis of information transmitted from a settlement body.
(i) To allow sellers to minimize costs by engaging in online sales without establishing or joining an online shopping mall and by obtaining reliable settlement information.
(j) To provide increased reliability of validation against fraud, if the settlement body uses detailed information about buyers themselves, registered with the settlement body, for settlement approval.
(k) To provide increased convenience since buyers may use user IDs and passwords specified for the settlement body, rather than using separate pairs of user IDs and passwords for each seller.
(l) To provide increased security, if buyers use IDs and passwords specified for the settlement body, because a single pair is more easily memorized than multiple such pairs used for each seller and security is often endangered by multiple such pairs being recorded in close proximity in personal notebooks and the like.

### BRIEF DESCRIPTION OF THE DRAWINGS

FIG. 1 is a block diagram of the overall order placement and payment settlement system that is a preferred embodiment of the present invention.
FIG. 2 illustrates the configuration of the server of a seller in the order placement and payment settlement system that is a preferred embodiment of the present invention.
FIG. 3 illustrates the configuration of the PC of a buyer in the order placement and payment settlement system that is a preferred embodiment of the present invention.
FIG. 4 illustrates the configuration of the server of a settlement body in the order placement and payment settlement system that is a preferred embodiment of the present invention.
FIG. 5 illustrates the structure of a buyer database on the server of a settlement body in the order placement and payment settlement system that is a preferred embodiment of the present invention.
FIG. 6 illustrates the structure of a seller database on the server of a settlement body in the order placement and payment settlement system that is a preferred embodiment of the present invention.
FIG. 7 depicts in broad outline the flow of information in the order placement and payment settlement system that is a preferred embodiment of the present invention.
FIG. 8 depicts in detail the flow of information in the order placement and payment settlement system that is a preferred embodiment of the present invention.
FIG. 9 depicts an order form in the order placement and payment settlement system that is a preferred embodiment of the present invention.
FIG. 10 depicts the login interface in the order placement and payment settlement system that is a preferred embodiment of the present invention.
FIG. 11 illustrates an extant online shopping system.
FIG. 12 illustrates how payments are collected and settled in extant online shopping systems.

### REFERENCE NUMERALS IN DRAWINGS

- 1: order placement and payment settlement system
- 2, 2₁, 2₂, 2₃, ...: seller servers
- 3, 3₁, 3₂, 3₃, ...: buyer PCs
- 4: communications network
- 5, 5₁, 5₂, 5₃, ...: settlement body servers
- 20: means of communication control
- 21: databases
- 22: product databases
- 23: settlement information databases
- 32: means of processing
- 51: means of communication control
- 52: means of processing
- 53: databases
- 531: buyer database
- 532: seller database

### DESCRIPTION OF THE PREFERRED EMBODIMENTS

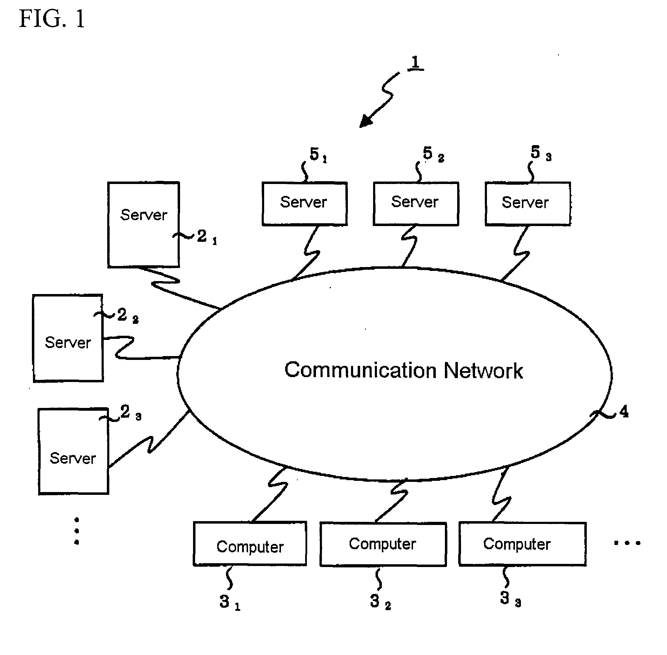

The following description of the preferred embodiment of the present invention makes reference to Figures 1 through 10.

Figure 1 is a block diagram of the overall order placement and payment settlement system that is a preferred embodiment of the present invention. In the order placement and payment settlement system 1 that is a preferred embodiment of the present invention, seller servers 2₁, 2₂, 2₃, ... 2m, buyer communications devices, including personal computers, (referred to below as communications devices) 3₁, 3₂, 3₃, ... 3n, and settlement body servers 5₁, 5₂, 5₃, ... 5p are connected via a communications network 4. The subscripts n, m and p indicate that the buyers, sellers and settlement bodies are particular, discrete identities. Individual seller servers 2₁, 2₂, 2₃, ... 2m, buyer communications devices 3₁, 3₂, 3₃, ... 3n, and settlement body servers 5₁, 5₂, 5₃, ... 5p are each equipped with means capable of communication, although such is not depicted in Figure 1.

Likewise, for the purposes of the preferred embodiment of the present invention the communications network shall be reckoned to be the Internet; however, those skilled in the art will recognize that any communications network, whether public or private, would serve equally well.

A buyer may obtain information on the goods, services, information or the like offered by a seller by means of a connection between a buyer communications device 3n to a seller server 2m. When a buyer decides to make a purchase from a seller to whose server he or she is thus connected, the buyer communications device 3n transmits the purchase order information to a settlement body server 5p. The settlement body server 5p then references one or more previously created buyer databases to ascertain the trustworthiness of the buyer and, if the buyer is deemed capable of completing the purchase, transmits the purchase order information to the seller server 2m.

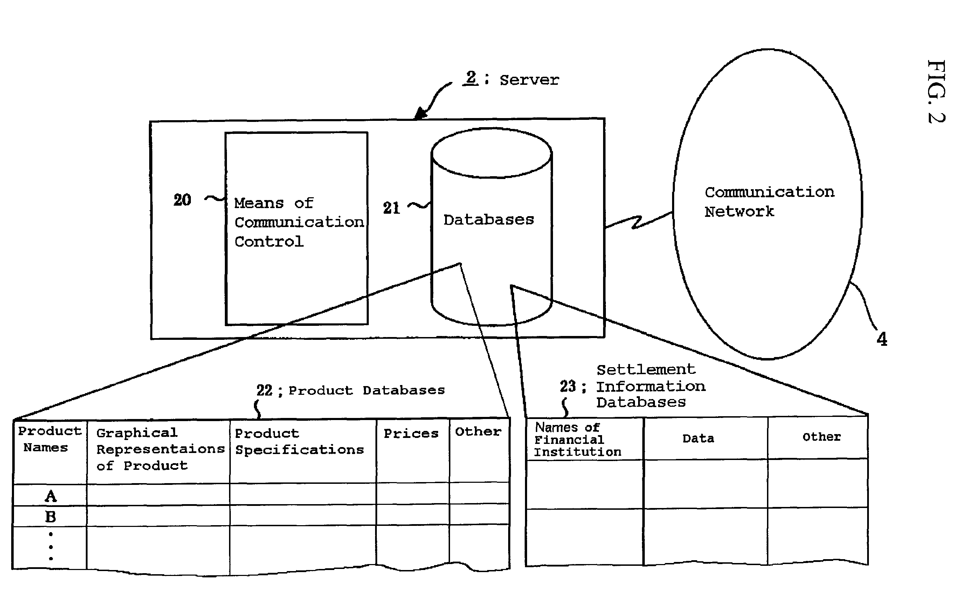

Figure 2 illustrates the configuration of the server of a seller in the order placement and payment settlement system that is a preferred embodiment of the present invention. The seller server 2 is comprised of a means of communication control 20 and multiple databases 21 storing product information and other information required for carrying out settlements and is capable of providing the product data in databases 21 in the form of webpages as directed by the means of communication control 20. The seller server 20 is connected to the communications network 4.

As shown in Figure 2, the databases 21 are comprised of one or more product databases 22 containing such information as product names, graphical representations of products, product specifications and prices, and one or more settlement information databases 23 containing information needed to carry out settlement. This settlement information may include, for example, the names of financial institutions and data or other information describing how to contact those financial institutions.

The means of communication control 20 is equipped with functions for transmitting to a buyer communications device 3n the data stored in database or databases 22 in the form of webpages in response to an external request.

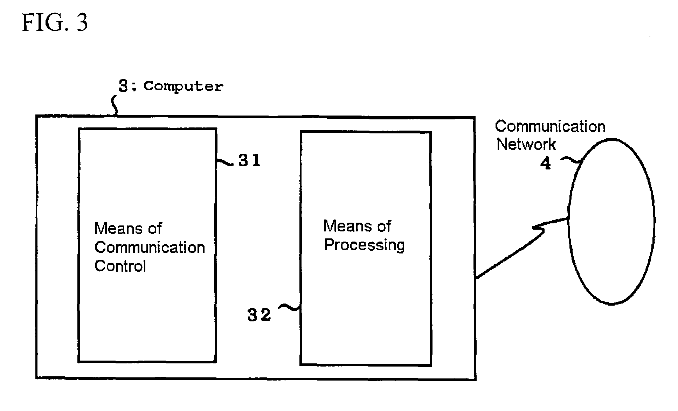

Figure 3 illustrates the configuration of the communications device that is a PC of a buyer in the order placement and payment settlement system that is a preferred embodiment of the present invention. The buyer communications device 3 is comprised of a PC proper and such input- and output-enabling peripherals as a monitor, mouse and keyboard. The buyer communications device 3 is equipped with a means of communication control 31 and a means of processing 32. The means of communication control 31 is capable of connecting to a seller server 2 and capable of connecting to a settlement body server 5.

The means of communication 31 is capable of communicating with a seller server 2 and displaying on the monitor the information, including sales offer information, thus transmitted via the communications network 4.

The means of processing 32 has functions capable of representing to the buyer a description of the purchase order when a product is selected by operating the keyboard, mouse or other means of input so that the buyer can confirm the selection has been interpreted correctly, representing to the buyer an interface for input of the buyer's own ID and password when a settlement body is determined and, when input is provided by the buyer, of storing the purchase order information and the input in a defined area of memory.

The means of processing 32 also has functions capable of connecting to a settlement body server 5p using the settlement body contact information stored in a prescribed area of memory and transmitting to that settlement body server the purchase order information stored in memory via the communications network 4.

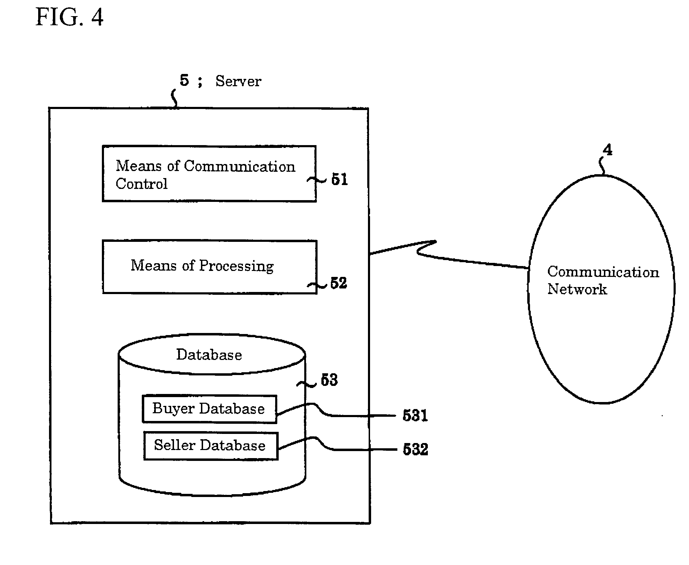

Figure 4 illustrates the configuration of the server of a settlement body in the order placement and payment settlement system that is a preferred embodiment of the present invention. The settlement body server 5 is comprised of a means of communication control 51, means of processing 52 and databases 53. The means of communication control 51 is capable of receiving purchase order information from buyer communications devices 3n and storing it in a prescribed area of memory, and of transmitting purchase order information to seller servers 2m when a buyer is deemed capable of completing a purchase.
The means of processing 52 is capable of referencing buyer databases 531 stored in databases 53 to ascertain the trustworthiness of buyers and determining whether to accept or reject a given purchase order depending on whether the trustworthiness of the buyer meets criteria provided for the value of the transaction.

The means of processing 52 is also capable of referencing seller databases 532 stored in databases 53 to ascertain the ratings of sellers, determining payment deferment periods on the basis of the ratings of individual sellers and, when a given payment deferment period expires without the buyer raising objection to payment, making payment to the seller.

The databases 53 are comprised of one or more buyer databases 531 and one or more seller databases 532.

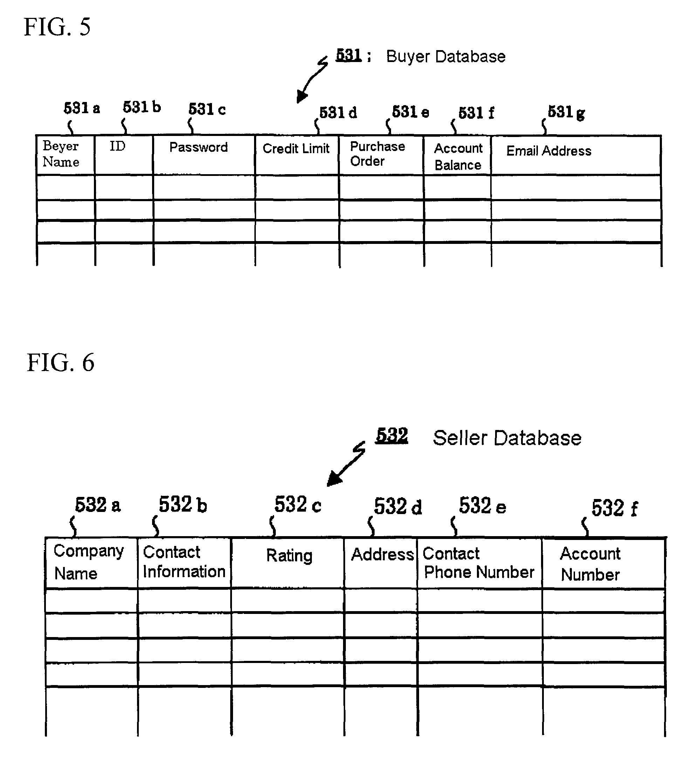

Figure 5 illustrates the structure of a buyer database in the order placement and payment settlement system that is a preferred embodiment of the present invention. The example of a buyer database 531 illustrated in Figure 5 is comprised of a buyer name field 531a, an ID field 531b, a password field 531c, a credit limit field 531d, a purchase order field 531e, an account balance field 531f and an email address field 531g.

Figure 6 illustrates the structure of a seller database in the order placement and payment settlement system that is a preferred embodiment of the present invention. The example of a seller database 532 illustrated in Figure 6 is comprised of a company name field 532a, a contact information field 532b, a rating field 532c, an address field 532d, a contact phone number field 532e and an account number field 532f. Buyer and seller databases should be encrypted.

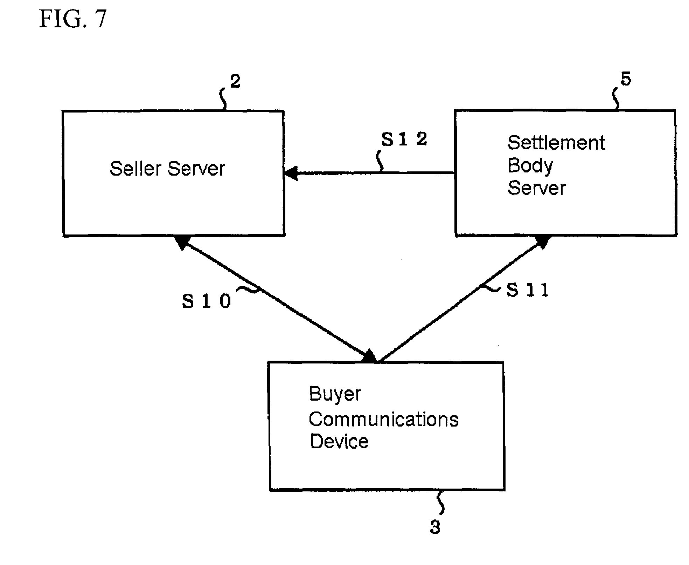

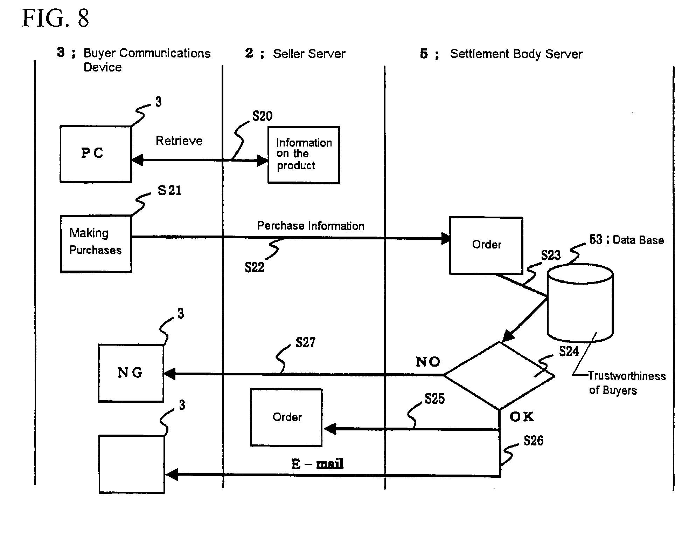

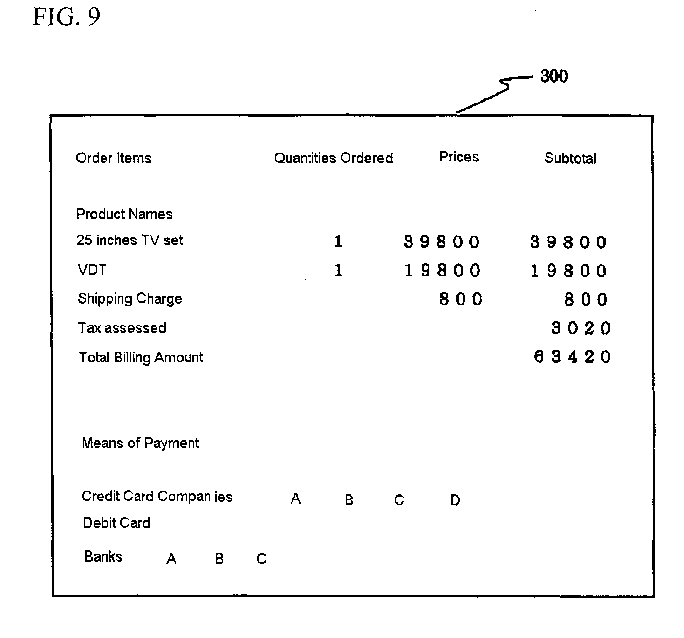

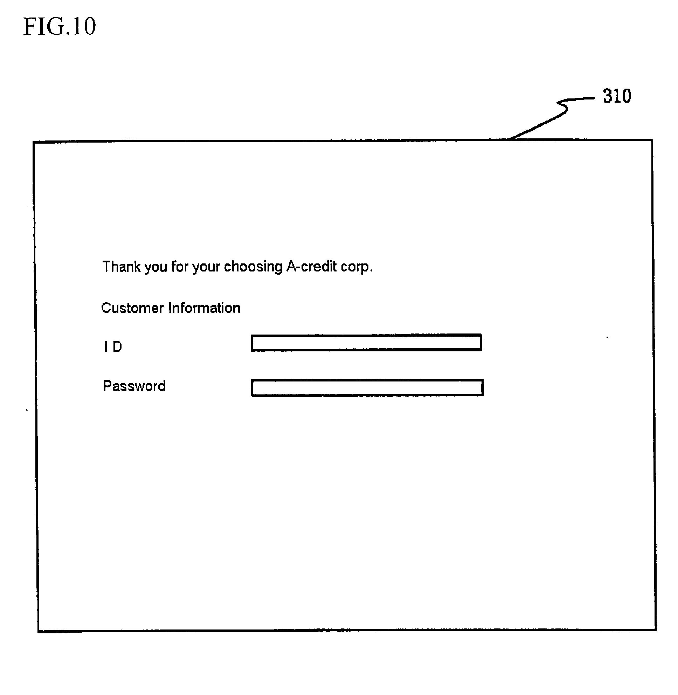

The following description of the operation of this order placement and payment settlement system makes reference to Figures 7 through 10 on the basis of Figures 1 through 6. Figure 7 depicts in broad outline the flow of information in the order placement and payment settlement system that is a preferred embodiment of the present invention. Figure 8 depicts in detail the flow of information in the order placement and payment settlement system that is a preferred embodiment of the present invention. Figure 9 depicts an order form in the order placement and payment settlement system that is a preferred embodiment of the present invention. Figure 10 depicts the login interface in the order placement and payment settlement system that is a preferred embodiment of the present invention.

First, we will describe how the system operates with a credit card company as a settlement body. Sellers need not be part of any particular online virtual mall and may freely provide product information to buyers over a communications network, as by publishing webpages. Although individual sellers must contract with the settlement body in advance, the present invention places no particular additional requirements on sellers since this requirement has conventionally applied to sellers making use of credit card or bank deposit transfer services. Buyers publish information on their goods, services, information or the like, as on webpages located on their servers 2m, and wait for buyers to access this information.

The initial description of how the system operates concerns itself with the settlement of payments for goods. The operation of the settlement system differs somewhat when applied to services and information, and these applications are addressed separately below.

First of all, the buyer connects to a seller server 2m via the communications network 4 from a buyer communications device 3n and accesses the sales offer information (product information) provided on the seller's webpages (S10 in Figure 7 and S20 in Figure 8). When the buyer selects a product for purchase, the means of processing 32 of the buyer communications device 3 executes the processing tasks specified and displays an array of purchase order information, such as the output 300 in Figure 9, on the monitor of the buyer communications device 3. The example output 300 in Figure 9 represents to the buyer such information as product names, quantities ordered, prices, a subtotal, a shipping charge, tax assessed, total billing amount and means of payment.
Output 300 must be converted as described below for connection to a settlement body server 5p. The purchase order information represented in output 300 is saved as hidden data in internal memory and thus retained for transmission, in a secure manner, when a connection is made to a settlement body server 5p.

It is essential that this information specify the seller. If sellers have been assigned standardized codes, those standardized codes may be used. Otherwise, the information may be provided as a seller code determined by the settlement body and included as hidden data in an XML form arranged with the settlement body.

The description following assumes specification by the buyer of credit card company A. When the buyer selects, as by clicking with a mouse, credit card company A from output 300, the buyer communications device 3 is redirected to a credit card company webpage; since information referencing this server is embedded in the purchase order output, the buyer can access the settlement body server 5 merely by clicking in the purchase order output.

Thus, when the buyer, viewing output 300 on the monitor of the buyer communications device 3, selects a payment method, as by clicking with a mouse, the means of processing 32 of the buyer communications device 3 connects to a settlement body server 5 via the communications network 4.

The settlement body server 5 transmits login interface information to the buyer communications device 3 to prompt the buyer for an ID and password; an example is output 310, which displays on the monitor of the buyer communications device 3 a message from the settlement body and input fields for an ID and password or other such information.

The buyer then supplies the settlement body with an ID and a password or other such information, as by typing the information from the keyboard of buyer communications device 3 and clicking an OK button with the mouse of buyer communications device 3 after confirming that the information is accurate (S21 in Figure 8), and the means of communication control 31 of the buyer communications device 3 transmits to the settlement body server 5 via the communications network 4 the purchase order information represented in output 300 (S11 in Figure 7 and S22 in Figure 8). This transmission constitutes both a request to the settlement body to serve as proxy in the agreement between the buyer and the seller concerning the product or other purchase and approval for the settlement body to effect settlement for that purchase.

The purchase order information may also be stored when the buyer communications device replaces the representation of the seller's output with the login interface of the settlement body server and the purchase order information transmitted to the settlement body server by the buyer communications device. The buyer could not then be specified to the settlement body server receiving the purchase order information, but the settlement body server would be able to store the IP address or other unique identifier of the buyer communications device and compare it with the ID and password input provided afterwards by the buyer. The settlement body would thus be able to specify and authenticate the buyer with certainty.

SSL or some other means of encryption should be used in addition to an output 310 in order to enhance security. An authentication code differing with each session should also be added to the transmission from the buyer communications device 3 to the settlement body server 5. To do so, a freshly generated authentication code is sent from the settlement body server 5 to the buyer communications device 3 each time a session is established. The use of a different code for each session established has the advantage of providing increased security. The authentication code should be sufficiently long (100 bytes, for example) and should be saved to a hard disk, floppy disk or other storage device to gain greater ease of use as well as security. If the code is saved to a hard disk, it becomes inconvenient to use multiple communications devices, but this inconvenience may be avoided by issuing multiple authentication codes for a single ID or by issuing multiple user IDs for a single credit card and assigning one authentication code to each such ID.

The authentication code is issued when a buyer first applies to register with a settlement body and resides in the buyer communications device 3. Each time the buyer connects to the settlement body, the buyer communications device 3 transmits the authentication code. The settlement body server 5 checks whether the code matches the buyer's ID. If so, it is possible to authenticate the buyer. The settlement body server 5 then transmits a new authentication code to the buyer communications device 3.

When a settlement body server 5p determines that the login information from a buyer communications device 3n is correct, it proceeds as follows. The means of processing 52 of the settlement body server 5 first references the buyer database 531 of databases 53 to ascertain the trustworthiness of the buyer and references the seller database 532 of databases 53 to ascertain the rating of the seller (S23 in Figure 8), and then, if the trustworthiness of the buyer, the buyer's ability to pay the purchase price, the rating of the seller or any other salient factor present no problem to the conclusion of a purchase agreement (S24/OK in Figure 8), transmits the stored purchase order information to the seller so that the transaction may be completed (S12 in Figure 7 and S25 in Figure 8). This transmission represents a purchase agreement between the buyer and the seller, arranged by the settlement body as proxy. At this point the purchase order information contains, in addition to price and a product number or other means of specifying the product, the buyer's name, address, telephone number and other such information required for product shipping purposes. The settlement body does not transmit to the seller the buyer's credit card number, bank account number or other such information. The settlement body should transmit to the seller an order number or the like for purposes of settlement and authentication. The settlement body should also transmit to the buyer the order number and other associated information. This order number would prove useful for the buyer to confirm the status of the order with the seller and to file complaints, as when an ordered product does not arrive.

The seller receives the purchase order information transmitted from the settlement body server 5 on a seller server 2m, accepts the order on the basis of this purchase order information and, if the order is for a tangible product, ships the product. If the order is for a service or information, the seller provides the service or information as specified in the purchase order information received from the settlement body. If necessary, the seller may transmit to the settlement body a message acknowledging receipt of the purchase order or a message that the order has been accepted, and the settlement body may inform the buyer, as by email, of such information received from the seller.

Settlement may be carried out at the point the purchase order information from the buyer passes through the settlement body server 5, or payments may be effected occasionally or after a certain period of time in order to prevent problems arising from non-delivery of a product from a seller to a buyer or poor product quality in a delivered product.

In other words, the means of processing 52 of the settlement server 5 may reference the seller databases 532 and establish a payment deferment period, as of eight days, sixteen days or one month, corresponding to the rating of the seller. A buyer with a complaint or other objection to payment may, within the payment deferment period, instruct the settlement body server 5 to stop payment and thus suspend settlement, and may subsequently confirm the status of a complaint. This allows both the buyer and the settlement body to avoid problems with unethical or dishonest sellers. Although buyers and sellers should, in principle, settle problems related to buyer complaints between themselves, settlement bodies may also intervene directly between buyers and sellers when necessary.

In circumstances where a seller practices deception by publishing webpages in which the seller represents itself to buyers or the general public as another, well-known merchant and arranges with a settlement body to take orders under its own, different name, the system thus described allows buyers to postpone settlement by filing a complaint and so serves to prevent such behavior on the part of sellers.

Since, in the order placement and payment settlement system of the present invention, a settlement body server 5p transmits purchase order numbers but not credit card numbers to seller servers 2m when transmitting purchase order information to those servers, orders may be placed without credit card numbers being released outside the settlement bodies.

Transmissions between settlement body servers 5p and seller servers 2m should be effected by some means of maintaining secrecy between the parties specific to the transaction, such as encryption, a private network or an Internet-capable virtual private network (VPN) to prevent identity theft and impersonation by third parties. While this communication constitutes the initiation of the transaction from the point of view of the seller, the buyer's credit has already been cleared at this point and the buyer will be debited by the settlement body, so the seller may handle the purchase order with confidence of receiving payment.

One cannot claim, even with this system, that there is absolutely no possibility of a third party somehow impersonating a buyer and abusing that position. The following arrangement may be adopted to restrict damage to a minimum. The means of processing 52 of a settlement body server 5p references a means of buyer contact in buyer databases 531, such as email address field 531g, contacts buyers by means of these contact means, registered in advance by buyers with settlement bodies, and transmits purchase order information to buyer communications device 3n via the communications network 4 (S26 in Figure 8) each time an order is placed or, in aggregate, at given intervals. This allows the system to prevent third parties from impersonating buyers. This is effective for online shopping, for example, because although shopping is generally performed on-screen by means of a browser, email constitutes an entirely different function of the communications network. It is also effective because buyer email addresses, or other contact information, are unknown to sellers and third parties. Moreover, the use of email does not restrict transactions to buyers operating communications devices, but opens them to buyers operating some telephone handsets or any other device with email capabilities.

The present invention also provides means for enhancing the unique authentication capabilities of a settlement body. Third parties with intentions of illicit acquisition tend to target high-priced products and those with high cashability, and the present invention is effective in deterring such illicit acquisitions. For example, a settlement body may register information provided by buyers (i.e. subscribers) in advance that is highly unlikely to be known to third parties. The maiden name of one's mother, for example, is often used for such purposes in Europe and North America. There are many other sorts of information that an individual is not likely to forget but third parties would have difficulty acquiring. The information may also constitute or reflect some aspect of an individual's personal tastes, such as a favorite movie or piece of music.

This information would not normally be released outside a settlement body, and, once registered with the settlement body, it may be used to authenticate buyers with greater certainty by comparing buyer input with the information registered.

A preferable arrangement would be to register multiple instances of such information and have buyers provide different input, selected from among those instances, at each session with the settlement body.

When a settlement body server 5p is unable to accept a purchase order due to the credit limit or trustworthiness of a buyer (S24/NO in Figure 8), the settlement body server 5 notifies the buyer communications device 3 to that effect (S27 in Figure 8).

The operation of the settlement system differs somewhat when applied to services and information. Payment settlement for services and information is addressed below.

Online sellers are rarely able to deliver services immediately. Almost all service deliveries are likely to occur at a later point in time. Examples include hotel and transport reservations. To make such reservations, a buyer communications device 3n would connect to the seller server 2 and, upon deciding on a reservation, then connect to a settlement body server 5p, just as when purchasing a tangible product. The settlement body server 5, just as when handling purchase orders for tangible products, then checks the credit limit of the buyer and transmits the purchase order information to the seller.

Although settlement may be effected at the point when the purchase information reaches the settlement body, in order to enhance the utility of the present invention, settlement should be effected after a defined deferment period following on the completion of provision of the service. For the buyer, deferment of settlement until after the completion of provision of the service constitutes assurance that complete provision of the service will be executed. At the same time, the seller is assured of the certainty of payment since the settlement body has been authorized by the buyer to effect settlement.

In a system in which settlements are effected subsequent to the completion of provision of services, settlement bodies do not effect settlement upon the transmission of purchase order information by a buyer, instead transmitting to the seller a purchase order number or reservation information, and information that specifies the buyer, such as a name and address. Just as when handling purchase orders for tangible products, settlement bodies should also transmit purchase order numbers to the communications devices of buyers. These purchase order numbers make it easy for buyers to register complaints about the failure of sellers to complete the provision of services.

When delivery of the service has completed, the seller requests the settlement body server 5 to effect settlement on the basis of the purchase order number. When the settlement server 5 receives this request, it effects settlement, just as when a tangible product is purchased. However, settlement is premised on an absence of complaints filed by the buyer, just as when a tangible product is purchased. Likewise, when effecting settlement for a service, the settlement server 5 should contact the buyer, as by email, to reduce security concerns.

The price of information purchased online may be determined either prior to or subsequent to the provision of the information. When the price of such information is determined subsequent to its provision, buyers are generally charged per volume of information or access time.

An example where charges billed for information delivered are determined prior to delivery would be the provision of music, and examples where charges billed for information are determined subsequent to delivery would be the provision of information billed according to the volume used, such as corporate information, fortune telling and encyclopedia access.

In one implementation, buyers would access a seller server 2m and identify the information they wish to purchase. A buyer having found the information sought would then connect to a settlement body server 5p but need only specify the seller. When connecting to the settlement body server, the buyer communications device 3n transmits information identifying the buyer and the maximum amount of information permitted to the buyer. The settlement body server 5 checks the buyer's credit against the maximum amount of information permitted to the buyer and transmits to the seller the IP address as unique identifying information of the buyer. The buyer then reconnects to the seller server 2 to purchase the information required. The seller is able to identify the buyer with certitude by means of verifying the IP address transmitted by the settlement body server. When the buyer reaches the limit on the amount of information allowed, the seller notifies the buyer of the limit and terminates the transmission. Here the amount of information permitted to the buyer is the amount of information actually received by the 'buyer. When the buyer terminates the transmission before reaching the limit on the amount of information allowed, the amount received up to that point is the amount of information actually received by the buyer, just as when charges are determined subsequent to delivery. The seller server 2 transmits to the settlement body server 5 the IP address of the buyer and the amount charged for the amount of information actually received by the buyer, and requests settlement.

However, although the above implementation is acceptable for connections with fixed IP addresses, it does not work for repeated use over Dynamic Host Configuration Protocol (DHCP) in which the IP address changes with each connection made. An ID system is the appropriate implementation for DHCP. Such an implementation would work in the same fashion as described above from buyer access to seller server 2 to reconnection to settlement body server 5 and the performance of the credit check against the maximum amount of information permitted to the buyer. If the buyer's credit is deemed sufficient upon referencing the relevant database, the settlement body server then transmits an ID to the buyer and the seller. This may be a stand-alone ID or it may be combined with a password. The ID constitutes information employed among the three parties to specify the buyer. It is used when the buyer communications device accesses the seller server after verification of the buyer by the settlement body, and it is also used when the seller requests the settlement body to effect settlement. Dishonest billing by sellers may be prevented by settlement bodies permitting settlement only of charges up to the amounts of information permitted to buyers.

Since the amount of information permitted to a buyer is predetermined, that amount will not be exceeded, and should a seller attempt in bad faith to bill a buyer an excessive amount, the settlement body would not recognize the charge. Moreover, damages may be held to a minimum since abuse of the IP address or ID by a third party would be limited to the amount of information permitted to the buyer.

Where the ID is an eight-character string consisting of alphanumeric characters and other ASCII characters, there are forty-six possible values for each character in the string, given twenty-six letters in the alphabet, ten Arabic numerals and ten other ASCII characters. This allows for twenty trillion different eight-character ID strings, which should be sufficient, but security should be enhanced by combining ID strings with passwords stored on the communications devices.

The foregoing discussion of preferred embodiments of the present invention of an order placement and payment settlement system for goods, services and information by credit card assumes that the communications device operated by buyers is a personal computer. However, embodiments of the present invention may equally be implemented in which devices operated by buyers are telephone handsets, handheld terminals or any other Internet-capable device capable of communication across the Internet or other telecommunications network as are available in the known marketplace or that may appear in future.

Additionally, the foregoing discussion of preferred embodiments of the present invention of an order placement and payment settlement system for goods, services and information by credit card assumes manual retrieval by buyers of seller server output and manual transmission by buyers of that information to settlement bodies. However, embodiments of the present invention may equally be implemented in which the mode of buyer purchasing is a special program. For example, some inventory control software packages are equipped with special programs (P1) that place orders for goods when their inventory volume falls below some specified level. P1 programs may search a set of predetermined websites, identify the website of the seller offering the lowest price and transmit the relevant purchase order information to a settlement body. Programs may also be installed on a computer that launch on a specified schedule to place orders for CDs released by some particular performer or place orders for tickets to some particular concert performance. Thus, orders may be initiated by computer programs as well as by human intervention.

Buyers need make no system-level modifications to the communications devices 3. When a buyer uses the output transmitted to him by a settlement body to connect to a seller, the seller transmits the information to the buyer.

Where charges are determined subsequent to use, settlement is effected by means of the seller informing the buyer of the amount charged for use and informing the settlement body of the amount charged and the order number used for settlement. As in other embodiments, the settlement server 5 should here inform the buyer by means of email to his communications device 3.
Settlements effected by means of debit cards at banks may be effected in the same manner as described above for credit cards. Whereas credit card settlements would be effected by credit card companies that approve or deny purchases on the basis of buyer credit limits, banks would do so on the basis of buyer account balances. Settlement bodies would debit buyer accounts when they receive purchase information from buyers and credit seller accounts after a predetermined deferment period. Banks should use their so-called "special deposits" to manage these monies as individual amounts during these deferment periods.

A concrete implementation of such a system may be provided by the seller creating output as follows. After a buyer selects a purchase, the seller transmits output describing the purchase order, such as the output 300 in Figure 9. The output contains options for means of making payment, such as the names of credit cards and banks, and hyperlinks or other means of connecting to the relevant institutions. When the buyer selects a settlement body, the buyer is connected to that settlement body by means of the information embedded in output 300. The purchase order information (product names, product codes, quantities ordered, prices, a shipping charge, tax assessed, total billing amount, etc.) in output 300 is written to a storage device connected to the buyer communications device 3. After connecting to the settlement body, the buyer transmits this information to the settlement body. This transmission may be effected automatically or at the instruction of the buyer.

Since information stored on the storage device differs with each seller and settlement bodies will find it troublesome to handle divergent such arrays of information, the output should have fixed tags and be formatted as XML or a similar markup language.

These preferred embodiments of the order placement and payment settlement system of the present invention provide numerous attendant benefits. First, they reduce opportunities to steal such information as credit card numbers and bank account numbers since it is not transmitted over the communications network 4. Second, they reduce the incidence of credit card fraud since such information as credit card numbers and bank account numbers is not transmitted over the communications network 4. Third, they allow sellers to do business with buyers with confidence since buyers are authenticated by settlement bodies. Fourth, they allow buyers to make purchases from sellers with confidence since sellers are authenticated by settlement bodies and since settlement may be deferred for some predetermined period of time, during which a buyer may register a complaint or other objection to settlement.

Similarly, settlement bodies are able to exclude unethical or dishonest sellers. Fifth, since settlement bodies notify buyers periodically, occasionally or on each instance of purchase orders placed., they allow buyers to detect at an early point illegitimate use of their identities, as registered with a settlement body, by third parties and hold damages to a minimum. Sixth, since settlement bodies assign each buyer communications device a different authentication code each time a communications session is established, they provide increased reliability of authentication and greater confidence in settlements.

Although these preferred embodiments of the order placement and payment settlement system of the present invention conceive of the product databases 22 and settlement information databases 23 on seller servers 2m as depicted in Figure 2, neither this conception nor its depiction are restrictive of the present invention, which allows for many other database implementations. Likewise, although these preferred embodiments of the order placement and payment settlement system of the present invention conceive of the buyer databases 531 as depicted in Figure 5 and seller databases 532 as depicted in Figure 6, neither these conceptions nor their depictions are restrictive of the present invention, which allows for many other database implementations. Likewise, although these preferred embodiments of the order placement and payment settlement system of the present invention conceive of the output 300 as depicted in Figure 9 and output 310 as depicted in Figure 10, neither these conceptions nor their depictions are restrictive of the present invention, which allows for many other forms of output.

The above-described preferred embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope and spirit of the present invention as defined by the following claims.

## Claims

1. A payment settlement body structure, comprising:
connection to a communications network of one or more servers of the settlement body, which collection of servers has access to information indicative of the trustworthiness of buyers;
means for the settlement body to receive purchase order information obtained by buyers from sellers and transmit purchase order information to seller servers only when information indicative of the trustworthiness of buyers made accessible to settlement body servers indicates a buyer to be capable of making payment.

2. An order placement and payment settlement system, comprising:
a multitude of transactions between a multitude of buyers and a multitude of sellers conducted via a communications network;
connection to the communications network of the servers of one or more of
the settlement bodies of Claim 1;
means for seller servers to publish information on products offered for sale;
means for buyers to undertake transactions by the retrieval of information from seller servers, the creation of purchase order information required to effect settlement and the transmission of that purchase order information to a settlement body server for purposes of approving settlement and requesting the selected settlement body to act as proxy for the buyer in placing the order;
means for seller servers to receive purchase order information transmitted by settlement bodies and take orders on the basis of the purchase order information transmitted by settlement bodies.

3. The order placement and payment settlement system of claim 1, additionally comprising:
means for settlement body servers to access information indicative of seller ratings, to establish payment deferment periods on the basis of seller ratings and to effect payment to a seller only when the buyer raises no objection during the payment deferment period.

4. The order placement and payment settlement system of claim 1, additionally comprising:
access to buyer contact information by settlement body servers; and
means for settlement body servers to use the buyer contact information to notify buyers of transactions undertaken, either at each instance of a transaction or occasionally or periodically.

5. The order placement and payment settlement system of claim 1, additionally comprising:
means for settlement body servers to transmit to buyer devices a different authentication code each time a buyer establishes a connection with a settlement body server; and
means for settlement body servers to compare the authentication code transmitted from a buyer device with that previously transmitted to it.

6. The order placement and payment settlement system comprising:
means for seller servers to publish information on products offered for sale;
means for seller servers to receive purchase order information transmitted by settlement bodies and take orders on the basis of the purchase order information transmitted by settlement bodies.
